# EUROPÄISCHE PATENTSCHRIFT

(11) **EP 4 558 243 B1**
(45) Veröffentlichungstag und Bekanntmachung des Hinweises auf die Patenterteilung: **04.11.2026**
(21) Anmeldenummer: 23754140.4
(22) Anmeldetag: 21.07.2023
(51) Int. Cl.: B01D 29/11, B01D 29/15, B01D 46/00, B01D 46/02, B29C 65/06

(54) **VERFAHREN ZUR ERZEUGUNG EINER FILTERSCHLAUCHEINRICHTUNG UND FILTERSCHLAUCHEINRICHTUNG HIERZU**
METHOD FOR CREATING A FILTER HOSE UNIT AND FILTER HOSE UNIT
PROCÉDÉ DE CRÉATION D'UNE UNITÉ DE TUYAU FILTRANT ET UNITÉ DE TUYAU FILTRANT

(30) Priorität: 21.07.2022 DE 102022002664
(43) Veröffentlichungstag der Anmeldung: 28.05.2025
(73) Patentinhaber: PFAFF Industriesysteme und Maschinen GmbH, 67661 Kaiserslautern (DE)
(72) Erfinder: HERZER, Karl, 67655 Kaiserslautern (DE)
(74) Vertreter: Rau, Schneck & Hübner Patentanwälte Rechtsanwälte PartGmbB
(86) Internationale Anmeldenummer: PCT/EP2023/025343
(87) Internationale Veröffentlichungsnummer: WO 2024/017507

(56) Entgegenhaltungen:
- EP-A2- 0 139 822
- WO-A1-97/18883
- CN-U- 202 781 829
- DE-A1- 1 536 922

## Beschreibung

Die Erfindung betrifft ein Verfahren zur Erzeugung einer Filterschlaucheinrichtung für eine Filteranlage zur Filtrierung von staub- und/oder rauchbelasteter Gase, bei dem ein biegeschlaffes textiles Werkstück im Bereich von zwei zueinander parallel verlaufenden Längskanten durch Erzeugung einer Naht zu einem Filterschlauch miteinander verbunden werden, an einer Stirnseite des auf diese Weise erzeugten rohrförmigen Filterschlauchs ein zumindest näherungsweise Bodenteil durch ein Schweißverfahren angebracht wird, um den Filterschlauch im Bereich seines Bodens zu verschliessen, und bei dem ein Drahtgestell in den Filterschlauch zur Formstabilisierung des Filterschlauchs eingeführt oder von zumindest einem äußeren Drahtring umgeben wird.

Insbesondere in der industriellen Produktion, bei Heizkraftwerken zur Stromerzeugung oder bei der Müllentsorgung können mit Partikeln belastete Gase anfallen, beispielsweise Rauchgase oder andere staubbelastete Gase. Beispiele hierfür sind Kohlekraftwerke, Zementkraftwerke oder auch Müllverbrennungsanlagen. Um diese Gase vor einem Ablassen in die Umwelt von Staub, Rauchgas und anderen Festkörperpartikel zu reinigen, werden häufig sogenannte Filterschlaucheinrichtungen verwendet. Hierbei werden üblicherweise eine Vielzahl von in einer Kammer angeordneter Filterschlaucheinrichtungen vorgesehen, um in die Kammer eingeleitetes Gas zu reinigen. Dieses gelangt in der Kammer an eine Außenseite der Filterschläuche der Filterschlaucheinrichtungen und durchströmen den jeweiligen Filterschlauch von außen nach innen. Es sind jedoch auch schon Lösungen bekannt geworden, bei denen die Gase die Filterschläuche von innen nach außen durchströmen. Auch im Zusammenhang mit der vorliegenden Erfindung sind beide Varianten möglich. Ist eine Durchströmung von außen nach innen vorgesehen, weisen die Filterschlaucheinrichtungen üblicherweise in ihrem inneren ein formstabilisierendes Drahtgestell auf. Aufgrund der Filterwirkung des Filterschlauchs und der Durchströmung von außen ins Innere sammeln sich an der Außenseite des Filterschlauchs die im Gas enthaltenen Partikel als Filterkuchen an. Um letzteren vom jeweiligen Filterschlauch zu entfernen kann vorgesehen sein, den Filterschlauch, bzw. die Filterschlaucheinrichtung insgesamt, maschinell zu rütteln, wodurch der Filterkuchen vom Filterschlauch abfällt. Hierdurch wird der Durchströmungswiderstand des Filterschlauchs wieder reduziert und die ursprüngliche Filterwirkung des Filterschlauchs wieder zumindest im wesentlichen hergestellt. Diese Rüttelbewegung wird üblicherweise in bestimmten Zyklen regelmässig wiederholt.

Um eine solche Filterschlaucheinrichtung herzustellen, wird üblicherweise eine textile Stoffbahn, beispielsweise aus synthetischem Nadelfilz, an zwei zueinander parallel verlaufenden Kantenbereichen zu einer zylindrischen Röhre miteinander verbunden. Diese Längsnaht kann mittels eines Nähautomaten in einem Nähvorgang erzeugt werden. In anderen bekannten Verfahren werden solche Längsnähte auch durch Schweißvorgänge erzeugt. Der Filterschlauch ist nach der Nahterzeugung an seinen Umfang geschlossen, aber an den beiden Stirnseiten offen. An letzteren wird anschließend ein Kopf- und ein Bodenteil angebracht. Mittels des Kopfteils wird die Filterschlaucheinrichtung im späteren Einsatz in der Filteranlage hängend angeordnet. Zur Anbringung des Bodenteils sind sowohl Verfahren mit einem Nähvorgang als auch Verfahren mit einem Schweißvorgang vorbekannt. Bei hochwertigen Filterschlaucheinrichtungen können genähte Nähte nachfolgend noch mit einem Band verschweißt und damit versiegelt werden, um eine Partikeldurchlässigkeit im Bereich der Nähnaht zu reduzieren, die sonst aufgrund der Nadeleinstiche in den Werkstoff des Filterschlauchs entstehen kann.

Die Anbringung des Bodenteils ist mit besonderen Schwierigkeiten verbunden.

Die Filterschläuche sind aus biegeschlaffen Werkstoffen hergestellt, deren bodenseitige Öffnung nicht von alleine in einer kreisrunden Sollform verbleibt. Die Verbringung des stirnseitigen Endes in diese kreisrunde Sollform ist jedoch zur Befestigung des Bodenteils am Filterschlauch erforderlich, zumindest erleichtert dies die Befestigung des Bodenteils erheblich. Es ist deshalb üblich, vor der Befestigung des Bodenteils das Drahtgeflecht in den Filterschlauch einzuführen, welches dem Filterschlauch seine zylindrische Form verleiht. An der bodenseitigen Stirnseite kann hierdurch zumindest näherungsweise die zur Befestigung des Bodenteils erforderliche Kreisform des Filterschlauchs erzeugt werden. Bei den oftmals mehrere Meter langen Filterschläuchen ist dies besonders zeitaufwändig und auch die Handhabung des dann sehr unhandlichen Filterschlauchs bei der Befestigung des Bodenteils ist besonders aufwändig.

Auch das Versiegeln mit zusätzlichen Bändern kann nachteilig sein, was jedoch erforderlich werden kann, wenn das Bodenteil durch einen Nähvorgang am Filterschlauch befestigt wird. So werden vermehrt Filterschläuche mit PTFE Beschichtungen verwendet. Sollen auf diese Bänder zur Versiegelung der Nähte aufgebracht werden, sind hierfür sehr hohe Temperaturen erforderlich bei denen jedoch gesundheitsgefährdende flourhaltige Abgase entstehen.

Erheblicher zusätzlicher Aufwand kann entstehen, wenn häufig und insbesondere abwechselnd Filterschläuche mit unterschiedlichen Solldurchmessern gefertigt werden sollen. Hier müssen Näh- und Schweißautomaten sowie deren Werkzeuge aufwändig umgerüstet werden.

Der Erfindung liegt deshalb die Aufgabe zugrunde, ein Verfahren anzugeben, das zur Erzeugung einer Filterschlaucheinrichtung der eingangs genannten Art einsetzbar ist und mit dem mit möglichst geringem technischem Aufwand, in trotzdem qualitativ hochwertiger Weise ein Bodenteil an einen Filterschlauch unlösbar anbringbar ist.

Diese Aufgabe wird bei einem Verfahren zur Erzeugung einer Filterschlaucheinrichtung der eingangs genannten Art erfindungsgemäß dadurch gelöst, daß das Bodenteil mittels eines Reibschweißvorgangs, insbesondere eines Rotationsreibschweißvorgangs, am Filterschlauch angebracht und mit diesem verbunden wird.

Die Aufgabe wird zudem durch eine Filterschlaucheinrichtung gemäß den Ansprüchen 8 bis 12 sowie durch eine Fertigungseinrichtung gemäß Anspruch 13 gelöst.

Aus dem Stand der Technik sind zwar bereits durch die WO 97/18883 Lösungen bekannt geworden, bei denen die Anbringung des Bodenteils einer Filterschlaucheinrichtung mittels Schweißverfahren erfolgt. Hierbei sind jedoch ausgerechnet Reibschweißverfahren nicht verwendet worden. Wie es sich im Rahmen der Erfindung gezeigt hat, sind jedoch Reibschweißverfahren zur Befestigung des Bodenteils besonders geeignet und liefern besondere Vorteile. So ist es mit einem Reibschweißverfahren in besonders günstiger Weise möglich, die miteinander zu verbindenden Bauteile gezielt nur in den Bereichen aufzuschmelzen, an denen die Bauteile miteinander verbunden werden sollen. Im Gegensatz zu anderen Schweißverfahren kann bei einem Reibschweißverfahren ein Plastifizieren/Aufschmelzen auch hierbei gezielt nur in Oberflächenbereichen der Bauteile erfolgen und nicht der gesamte Nadelfilz, aus welchem der Filterschlauch und das Bodenteil häufig bestehen. Bei diesen Oberflächenbereichen kann es sich in vorteilhafter Weise insbesondere um innenliegende Oberflächenbereiche handeln, die bei der Ausführung des Reibschweißverfahrens und der dabei ausgeführten relativen Bewegungen der miteinander zu verbindenden Bauteile in Kontakt miteinander stehen und dabei von außen nicht zugänglich sind. Die Bauteile werden hierbei vorzugsweise nicht über ihre gesamte Bauteildicke plastifiziert/angeschmolzen und nachfolgend wieder abgekühlt, sondern nur oberflächlich im jeweiligen Kontaktbereich. Hierdurch kann zudem eine Sprödigkeit der Bauteile im Bereich der Verbindungsnaht vermieden werden, welche sonst im Einsatz der Filterschlaucheinrichtung leicht zu Nahtbrüchen führen kann, beispielsweise aufgrund der regelmäßig erfolgenden Rüttelvorgänge, mittels denen der Filterkuchen von der Außenseite des Filterschlauchs abgeschüttelt werden soll.

In besonders vorteilhafter Weise kann das Reibschweißverfahren, mittels dem das Bodenteil an der bodenseitigen Stirnseite des Filterschlauchs angeschweißt wird, als Rotationsschweißverfahren ausgebildet sein oder zumindest einen Rotationsverfahrensschritt enthalten. Hierbei führen die miteinander zu verbindenden Bauteile eine relative Rotationsbewegung aus, vorzugsweise unter gleichzeitiger Ausübung eines axialen Anpressdrucks der beiden Bauteile gegeneinander. Ein solches Verfahren läßt sich mit besonders geringem Aufwand realisieren, da hierzu lediglich eine relative Rotationsbewegung zwischen dem Bodenteil und dem stirnseitigen Ende des Filterschlauchs erforderlich ist. Vorzugsweise kann die Rotationsbewegung vom vorzugsweise zumindest in etwa kreisrunden flächigem Bodenteil ausgeführt werden, während der Filterschlauch bei der Ausführung des Rotationsschweißvorgangs in einer Halteeinrichtung angeordnet, fixiert und ortsfest ist. In anderen Ausführungsformen der Erfindung ist es jedoch auch möglich, daß die relative Rotationsbewegung vom Filterschlauch ausgeführt wird. Ebenso ist eine Aufteilung der relativen Rotationsbewegung zwischen den Bauteilen auf das Bodenteil und den Filterschlauch möglich, beide Bauteile können somit gleichzeitig oder nacheinander eine Rotationsbewegung ausführen.

In einer bevorzugten erfindungsgemäßen Ausführungsform des Verfahrens kann in Abhängigkeit der vorgesehenen Werkstoffe der Fügepartner eine Wahl der Größe der eingesetzten Drehzahl und und des axialen Drucks vorgenommen sein. Ebenso kann die Dauer der Rotation so gewählt sein, daß eine ausreichende Verflüssigung und eine ausreichende Schmelzendicke erzeugt wird. Ist dieser Zustand erreicht, kann ein Abbremsen des rotierenden Fügepartner bis zum Stillstand erfolgen. Vorzugsweise kann sich dann eine Haltephase unter einem axialen Haltedruck anschließen. Der Haltedruck kann sich vom Druck während der vorausgegangenen Reibphase unterscheiden. Ebenso wie der Reibdruck kann auch der Haltedruck während der Dauer der Reibphase bzw Haltephase variieren und nicht konstant sein. Während der Haltephase kühlt die Schmelze ab und erstarrt, wodurch die beiden Fügepartner dauerhaft miteinander verbunden sind.

Eine bevorzugte erfindungsgemäße Ausführungsform, die auch gegen eventuelle ungenaue Ausrichtungen des Bodenteils gegenüber dem stirnseitigen Ende des Filterschlauchs und auch bei Toleranzen der beiden Werkstücke tolerant ist, kann vorsehen, daß das Bodenteil im Bereich der Stirnseite des Filterschlauchs auf dessen Innenseite mittels des Reibschweißvorgangs am Filterschlauch befestigt wird.

Das Herstellungsverfahren für eine erfindungsgegemäße Filterschlaucheinrichtung kann in einer bevorzugten Ausgestaltung vorsehen, daß ein Ende des Filterschlauchs in ein erstes Ende einer ringförmige Werkstückhalteeinrichtung für den Filterschlauch eingeführt, das eingeführte Ende des Filterschlauchs durch die ringförmige Werkstückhalteeinrichtung hindurchgeführt wird, das stirnseitige Ende des Filterschlauchs aus dem anderen Ende der ringförmigen Werkstückhalteeinrichtung hinausgeführt und im Bereich seines hindurchgeführten stirnseitigen Endes mit seiner Außenseite (Umfangsseite) auf eine Stirnseite der ringförmigen Werkstückhalteeinrichtung zur Auflage gebracht wird. Anschließend wird das Bodenteil gegen die Innenseite des Filterschlauchs zur Anlage gebracht und das Bodenteil in eine rotative Relativbewegung in Bezug auf den und relativ zum Filterschlauch versetzt. Durch die Relativbewegung und des hierbei vorzugsweise ausgeübten Drucks vom Bodenteil auf den Filterschlauch oder umgekehrt, werden die Kontaktbereiche zwischen dem Bodenteil und der Innenseite des Filterschlauchs oberflächlich plastifiziert bzw. angeschmolzen und fließen ineinander. Die Rotationsbewegung kann dann gestoppt werden, was wiederum zu einer Abkühlung der aufgeschmolzenen bzw. plastifizierten Bereiche und zur stoffschlüssigen lokalen flächigen Verbindung des Bodenteils mit dem Filterschlauch führt. Die Verbindungsstelle zwischen dem Bodenteil und dem Filterschlauch kann somit in etwa eine kreisringförmige Gestalt aufweisen.

Ebenfalls abweichend vom bisher üblichen Vorgehen bei der Befestigung des Bodenteils am stirnseitigen Ende des Filterschlauchs, kann in vorteilhafter Weise vorgesehen sein, daß zuerst das Bodenteil am stirnseitigen Ende des Filterschlauchs befestigt wird und erst danach das den Filterschlauch formstabilisierende Gestell, insbesondere ein Drahtgestell, an der gegenüberliegenden Stirnseite des Filterschlauchs in letzteren eingeführt und bis in seine Endlage im Filterschlauch vorgeschoben wird. Das Gestell erst nachträglich in den oftmals mehrere Meter langen Filterschlauch einzuführen erleichtert ganz erheblich den Vorgang der Befestigung des Bodenteils am Filterschlauch.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig. 1: eine stark schematisierte Darstellung einer Filteranlage mit darin eingesetzten mehreren Filterschlaucheinrichtungen, welche teilweise geschnitten dargestellt sind;
- Fig. 2: ein vollständiger Filterschlauch von einer der Filterschlaucheinrichtungen aus Fig. 1 in einer bevorzugten Ausführungsform;
- Fig. 3: eine Detaildarstellung A eines unteren Endes des Filterschlauchs aus Fig. 2;
- Fig. 4: eine Stirnseite eines Filterschlauchs und ein von einem Scheibenhalter einer Rotationsschweißanlage gehaltenes Bodenteil;
- Fig. 5: der Filterschlauch, Scheibenhalter und das Bodenteil aus Fig. 3 in einer perspektivischen Darstellung von oben;
- Fig. 6: der Filterschlauch, Scheibenhalter und das Bodenteil aus Fig. 3 in einer Längsschnittdarstellung;
- Fig. 7: eine Detaildarstellung C aus Fig. 6.

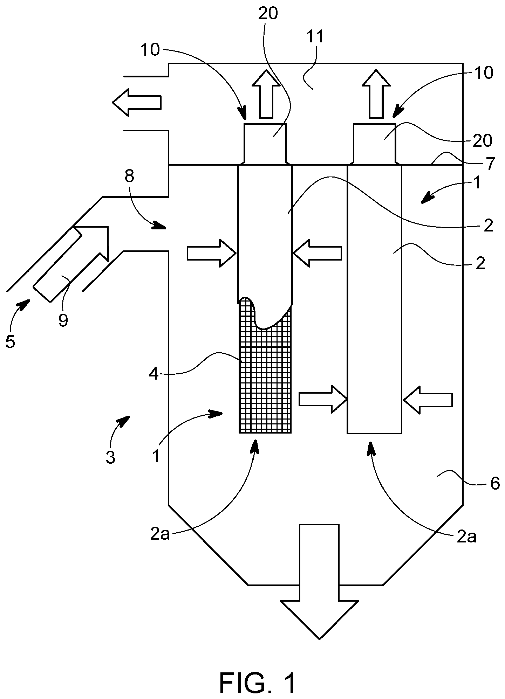

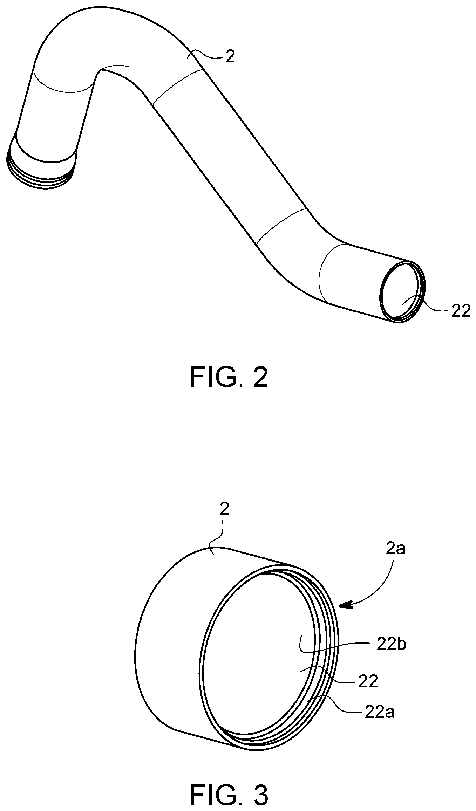

In den Fig. 1 und 2 ist eine bevorzugte Ausführungsform einer erfindungsgemäßen Filterschlaucheinrichtung 1 gezeigt. Diese weist als Hauptbestandteil einen Filterschlauch 2 auf, der in seiner Gebrauchslage eine zumindest im wesentlichen zylindrische Form oder Röhrenform hat. Im Filterschlauch 2 kann ein Draht- oder Stützgestell 4 angeordnet sein, welcher dem Filterschlauch 2 in seiner Gebrauchslage seine Sollform und Formstabilität verleiht. Derartige Stützgestelle 4 sind im Zusammenhang mit Filterschlaucheinrichtungen 1 an sich vorbekannt. Der Filterschlauch 2 kann aus einem biegeschlaffen Werkstoff hergestellt sein oder zumindest überwiegend aus einen solchen bestehen. Unabhängig von im Zusammenhang mit diesem Ausführungsbeispiel der Erfindung beschriebenen weiteren Merkmale und Eigenschaften, sind Beispiele für geeignete Werkstoffe des Filterschlauchs 2 und des Bodenteils 22 insbesondere Thermoplaste, beispielsweise Polyester, Polyamide, Polypropylen, Polyethylen, Acryl, Polyphenylensulfide und weitere Werkstoffe aus der Gruppe der Thermoplaste sowie Mischungen davon und Mischungen mit Fasern aus anderen Werkstoffen. Auch thermoplastische Elastomere können grundsätzlich geeignet sein. Diese Aufzählung ist nur beispielhaft und nicht vollständig. Es werden hierbei aus diesen Werkstoffen erzeugte Textilbahnen verwendet, welche eine ausreichende Gasdurchlässigkeit bei gleichzeitiger Filterwirkung für Feststoffpartikel aufweisen, wie sie beispielsweise im Rauchgas von Müllverbrennungsanlagen, Zementkraftwerken oder in Kraftwerksanlagen vorkommen, in denen fossile Brennstoffe zur Stromerzeugung verbrannt werden. Dies stellt keine abschliessende Aufzählung von möglichen Anwendungsfällen von erfindungsgemäßen Filterschlaucheinrichtungen 1 dar, solche können grundsätzlich bei jeder Form von Reinigungen oder Trennungen von Festkörperpartikel aus Gasen zum Einsatz kommen.

Die Filterschlaucheinrichtung 1 kann auch optional mit einer oder mehreren äußeren Verstärkungen versehen sein, beispielsweise zumindest eine beispielsweise mittig angeordnete manschettenartige Verstärkung sowie ebenfalls manschettenartige Verstärkungen, die am kopfseitigen Ende und am bodenseitigen Ende des Filterschlauchs 2 angeordnet sind. Diese Verstärkungen können mit Nähten, beispielsweise auch mit ein oder mehreren Doppelnähten, am Filterschlauch befestigt sein. Die kopfseitige Verstärkung kann zusätzlich mit einer Befestigungshilfe zur lösbaren und hängenden Anordnung der Filterschlaucheinrichtung 1 in einer Filteranlage 3 versehen sein. Eine solche Befestigungshilfe kann beispielsweise ein in der oberen (kopfseitigen) Verstärkung eingearbeiteter elastischer Schnappring (nicht dargestellt) sein, der sich als Teil einer Schnappverbindung an einer Aufnahme der Filteranlage 3 schnell und vorzugsweise werkzeuglos lösbar befestigen lässt. Eine solche Filteranlage ist in Fig. 1 rein schematisch skizziert. Es handelt sich hierbei um eine Kammer 6, in welche ein Abgaskanal 5 führt. In der Kammer 6 sind mehrere solcher Filterschlaucheinrichtungen 1 hängend angeordnet. Ein Deckenelement 7 der Kammer 6 kann hierzu kreisrunde Ausnehmungen bzw Durchbrüche aufweisen, in welche jeweils eine der Filterschlaucheinrichtungen 1 einsetzbar sind. Üblicherweise sind in einer solchen Filteranlage 3 eine Vielzahl von Filterschlaucheinrichtungen 1 gleichzeitig angeordnet. Ein Durchmesser der Ausnehmungen im Deckenelement 7 kann hierbei auf den Durchmesser des jeweiligen Schnapprings derart abgestimmt sein, daß der Schnappring mit Kraftaufwand durch die Ausnehmung hindurchgedrückt werden kann, sich hinter der Ausnehmung wieder entspannt und die Filterschlaucheinrichtung 1 dann mit einem oberen Ringelement (nicht dargestellt) am Randbereich der Ausnehmung auf dem Deckenelement 7 aufliegt. Die Filteranlage 3 kann einen Einlaß 8 aufweisen, durch welchen zu reinigendes Gas in die Kammer 6 einfließt. In der Darstellung von Fig. 1 ist das durch den Einlaß 8 einströmende ungereinigte Gas/Rauchgas durch den Pfeil 9 symbolisiert. Ein Überdruck in der Kammer 6 führt dazu, daß das zu reinigende Gas, beispielsweise Rauchgas, durch den Filterschlauch 2 der Filterschlaucheinrichtung 1 hindurch in dessen Inneres gelangt und Partikel, beispielsweise Partikel im Rauchgas, hierbei vom Filterschlauch 2 aufgefangen werden. Das somit nach der Passage durch den Filterschlauch 1 gereinigte Rauchgas gelangt dann durch das offene obere Ende 10 der jeweiligen Filterschlaucheinrichtung 1 zum Auslass 11 der Filteranlage 3 und anschließend durch eine weitere Ableitung ins Freie. In bestimmten zeitlichen Abständen können die Filterschlaucheinrichtungen 1 gerüttelt werden, wodurch gefilterte Partikel von den Filterschläuchen 2 abgeschüttelt werden.

Zur Fertigung einer solchen bevorzugten Ausführungsform einer erfindungsgemäßen Filterschlaucheinrichtung 1 kann zunächst ein zumindest im wesentlichen rechteckiger, biegeschlaffer, textiler Zuschnitt oder eine in dieser Form vorkonfektionierte Stoff- bzw Textilbahn eines Filterwerkstoffs, wie beispielsweise Nadelfilz, für die zu erzielende Zylinderform vorgesehen werden. Der Zuschnitt sollte dabei zumindest ungefähr eine Länge aufweisen, die der Länge des zu fertigenden Filterschlauchs 2 entspricht. Typischerweise haben Filterschlaucheinrichtungen 1 eine Länge von bis zu mehreren Metern. Eine Breite des Zuschnitts kann auf den zu erzielenden Durchmesser des Filterschlauchs 2 abgestimmt sein, da die Breite des Zuschnitts zumindest in etwa dem Umfang des Filterschlauchs 2 entspricht. Der biegeschlaffe Zuschnitt wird derart geformt, daß sich die Kantenbereiche der langen Längskanten überlappen, in diesem Bereich also eine doppelte Stofflage vorhanden ist. Der Zuschnitt ist dabei derart geformt worden, dass sich im überlappenden Bereich eine Außenseite des Zuschnitts gegen eine Innenseite des Zuschnitts zu liegen kommt. Der Zuschnitt kann dann in an sich bekannter Weise in diesem überlappenden Bereich mittels einer Nahterzeugungseinrichtung mit einer oder mehreren Längsnähten versehen werden, die parallel zu den Kantenbereichen über deren gesamte Länge verlaufen. Es können sich hierbei um genähte oder um geschweißte Nähte handeln. Letztere sind aufgrund der für derartige Filtermaterialien üblichen Werkstoffe mit zumindest einem hohen Anteil an thermoplastischen Fasern möglich. Falls die Kantenbereiche mit einer oder mehreren parallel zueinander verlaufenden genähten Nähten versehen werden, kann nach der Erzeugung dieser einen oder mehreren Nähte auf die zumindest eine Naht ein thermoplastisches Band zur Versiegelung aufgeschweißt werden, damit durch die in das Material beim Nähen eingebrachte Stiche nicht Partikel aus dem zu reinigenden Gas hindurchgelangen können.

Nun kann das Kopfteil 20 als Kopfmanschette am Filterschlauch 2 in an sich bekannter Weise am späteren oberen Ende des Filterschlauchs 2 angebracht werden, nämlich dadurch, daß eine zuvor separat vorgefertigte Kopfmannschette an das Kopfende angenäht wird. In diesem Kopfteil kann der Spannring eingearbeitet sein. Alternativ kann das Kopfteil 20 auch erst am Ende der Fertigung des Filterschlauchs 2 angefügt werden, also nachdem das Bodenteil 22 an den Filterschlauch 2 bereits an den Filterschlauch 2 angefügt ist.

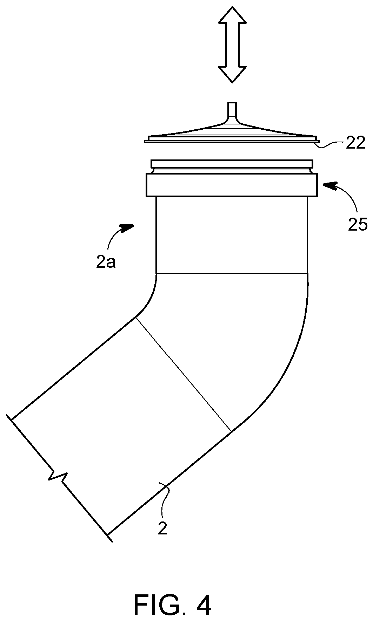

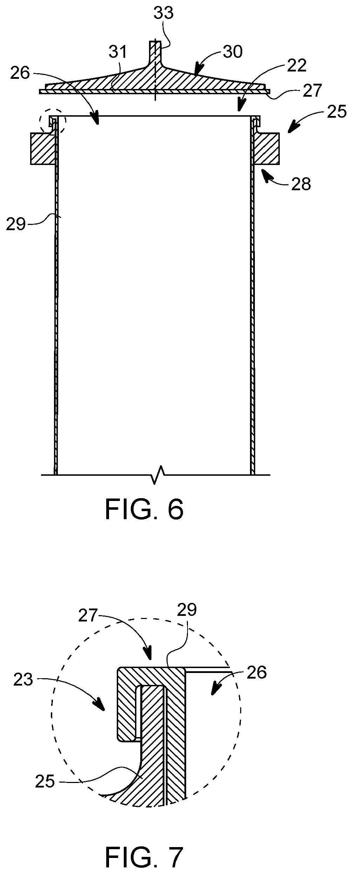

Zuvor oder anschließend kann das Bodenteil 22 (beispielsweise Fig. 3) am - bezüglich der Gebrauchslage der Filterschlaucheinrichtung 1 - unteren Ende 2a des Filterschlauchs 2 angebracht werden. Das Bodenteil 22 ist hierbei im noch nicht befestigten und unbelasteten Zustand eine kreisrunde Scheibe (Fig. 4 - 6) und weist vorzugsweise den gleichen Werkstoff bzw das gleiche textile Material wie der Filterschlauch 2 auch, der zumindest im wesentlichen gasdurchlässig ist. Auch das Material bzw. der Werkstoff des Bodenteils 22 ist somit vorzugweise biegeschlaff, also nicht in sich selbst formstabil. Das Bodenteil 22 kann beispielsweise auch ein Nadelfilz sein. Grundsätzlich ist es aber auch denkbar, daß der Werkstoff des Filterschlauchs 2 ein anderer ist als der Werkstoff des Bodenteils 22. Da der Filterschlauch 2 im Bereich seines unteren Endes mit dem Bodenteil 22 reibverschweißt werden soll, sollte aber mit Vorteil vorgesehen sein, daß die beiden Werkstoffe bei Anwendung eines Rotationsreibschweißverfahrens aufschmelzen, sich dabei miteinander vermischen und beim Abkühlen eine stoffschlüssige Verbindung miteinander eingehen.

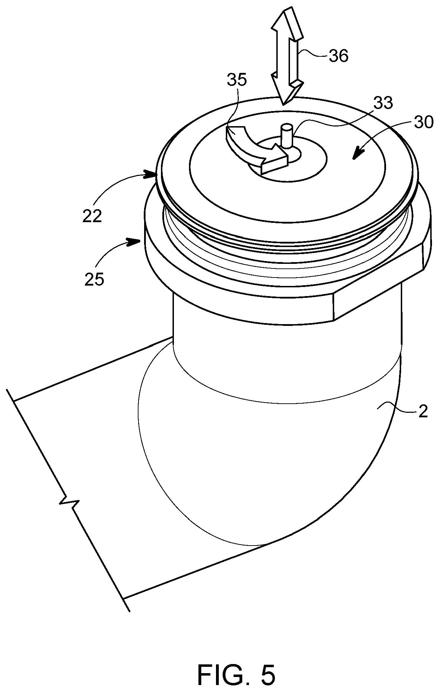

Wie in den Fig. 4 - 7 gezeigt ist, kann zur Anbringung des Bodenteils 22 am - bezüglich der späteren Gebrauchslage - unteren stirnseitigen Ende 2a des Filterschlauchs 2, dieses Ende in eine Haltevorrichtung 25 eingeführt werden, welche beispielhaft in den Fig. 5 - 7. Die Haltevorrichtung 25 kann im wesentlichen eine Ringform mit einer zylindrischen Durchgangsausnehmung 26 aufweisen. Im Bereich einer Stirnseite 27 der Haltevorrichtung 25 kann diese einen geringeren Außendurchmesser aufweisen als an ihrer anderen Stirnseite 28.

Um in der Haltevorrichtung 25 angeordnet zu werden, wird das stirnseitige untere (bezüglich der Gebrauchslage) Ende 2a des Filterschlauchs 2 von der Stirnseite 28 der Haltevorrichtung 25 aus in die Durchgangsausnehmung 26 ein- und durch diese hindurchgeführt. Um dies mit geringem Aufwand durchführen zu können ist es hilfreich, wenn vorzugsweise hierbei das Draht- oder Stützgestell 4 noch nicht in den Filterschlauch 2 eingeführt ist und hierdurch der Filterschlauch 2 mit geringem Aufwand gehandhabt werden kann. Das stirnseitige Ende 2a des Filterschlauchs 2 wird durch die Durchgangsausnehmung 26 komplett hindurchgeführt und dann an der anderen Stirnseite 27 der Haltevorrichtung 25 umgebördelt bzw. umgestülpt. Die Umbördelung bzw. Umstülpung 23 findet hierbei beispielsweise über eine Länge statt, die etwa der Länge entspricht, über welche die Haltevorrichtung 25 an dieser Stirnseite 27 eine kleineren Außendurchmesser als im übrigen Außenumfangsbereich der Haltevorrichtung 25 aufweist. Auf diese Weise wird im Bereich der Stirnseite 27 der Haltevorrichtung 25 die Innenseite 29 des Filterschlauchs 2 offengelegt und wird direkt zugänglich.

Das Bodenteil 22 kann von einem Scheibenhalter 30 aufgenommen werden. Hierzu kann die im wesentlichen kreisrunde Kontaktseite 31 des Scheibenhalters 20 vorzugsweise mit Klett versehen sein, der sich mit dem textilen Werkstoff des Filterschlauchs 2 verhakt und diesen festhält. Eine andere Möglichkeit, um das Bodenteil 22 am Scheibenhalter 30 für den Reibschweißvorgang zu halten, kann darin bestehen, daß das Bodenteil 22 mittels Unterdruck angesaugt oder mittels Widerhaken rotationsfest gehalten wird. Die Größe der Kontaktfläche des Scheibenhalters 30 kann im wesentlichen der Größe der Oberfläche des Bodenteils 22 entsprechen. Der Scheibenhalter 30 weist auf seiner der Aufnahmefläche gegenüberliegenden Seite einen Bolzen 33 auf, mit welchem dieser in ein Drehfutter eines Rotationsantriebs eingespannt werden kann. Das Futter kann zu einer Rotationsschweißanlage gehören, wie sie an sich und in anderem Zusammenhang vorbekannt ist. Bei dieser wird der in das Futter eingespannte Scheibenhalter 30 durch einen motorischen Antrieb in Rotation (Pfeil 35) versetzt und der Scheibenhalter 30 mit einer von der Rotationsschweißanlage ausgeübten vorbestimmbaren Kraft (Pfeil 36) in Richtung der Rotationsachse gegen die Innenseite 29 des Filterschlauchs 2 angedrückt, der mit seiner Außenseite auf der Stirnseite 27 der Haltevorrichtung 25 aufliegt. Alternativ könnte auch die Haltevorrichtung 25 in Richtung der Rotationsachse und den Scheibenhalter 30 kraftbeaufschlagt sein, um den Filterschlauch 2 gegen das Bodenteil 22 anzudrücken. Die hierbei erforderlichen Drehzahlen und aufzuwendenden Kräfte können mit wenigen Versuchen ermittelt werden und außerdem zumindest weitestgehend auf Erfahrungswerte gestützt sein. Typische geeignete Rotationsgeschwindigkeiten im Kontaktbereich können beispielsweise aus einem Bereich von 100 m/min bis 500 m/min gewählt sein. Bei typischen Durchmessern der Filterschläuche von 60mm - 400mm, die auch bei bevorzugten Ausführungsformen erfindungsgemäßer Filterschläuche vorgesehen sein können, entsprechen diese bevorzugten Rotationsgeschwindigkeiten Drehzahlen aus einem Bereich von 80 U/min bis zu 2'200 U/min. Bevorzugte Drehzahlen können auch aus einem Bereich von 60 U/min - 3000 U/min gewählt sein.

Wie insbesondere in den Fig. 4 - 7 erkennbar ist, wird hierbei das vorzugsweise rotationssymmetrische Bodenteil 22 zentrisch gegen den Bereich der Innenseite 29 des Filterschlauchs 2 gedrückt. Das Bodenteil 22 kann auch einen etwas größeren Durchmesser als der Durchmesser des Filterschlauchs 2 aufweisen. Das Bodenteil 22 gelangt hiermit mit einem Kreisringabschnitt in Kontakt mit dem Bereich der Innenfläche 29 des Filterschlauchs 2, der einen Abstand zum Rand des Bodenteils 22 aufweist. In diesem Kreisring, entlang dessen die beiden Bauteile nun miteinander in Kontakt sind, erwärmen sich die Werkstoffe dieser beiden Bauteile und schmelzen lokal auf. Durch die Reibung sollten somit die Werkstoffe der beiden Bauteile in ihrem Kontaktbereich plastifiziert werden, also an dieser Stelle möglichst unmittelbar kurz über ihren Schmelzpunkt erhitzt werden. Die Werkstoffe sind hierdurch fließfähig und die Werkstoffe können auch als Folge des ausgeübten Drucks und der Rotationsbewegung ineinanderfließen. Die relative Rotationsbewegung zwischen dem Bodenteil 22 und dem Filterschlauch 2 kann nun gestoppt werden, wodurch die plastifizierten Werkstoffe wieder abkühlen und ineinander erstarren. Hierdurch ist dann mittels des Rotationsreibschweißverfahrens eine Reibschweißverbindung zwischen dem Bodenteil 22 und der Innenseite 29 des Filterschlauchs 2 im Bereich von dessen (bezogen auf die spätere Gebrauchslage) unteren Stirnseite erzeugt worden. Durch die Wahl von auf die jeweiligen Kontaktpartnern abgestimmten und geeigneten Parametern des Rotationsreibschweißverfahrens, insbesondere der Rotationsgeschwindigkeit im Kontaktbereich, sowie der in axialer Richtung zwischen den beiden Kontaktpartner ausgeübten Anpresskraft, sollte vorzugsweise erreicht werden, daß die Werkstoffe im Kontaktbereich nicht über die gesamte Dicke aufschmelzen sondern nur soweit, wie dies für die Erzeugung einer Verbindung im Kontaktbereich der beiden Bauteile erforderlich ist. Hierdurch können Sprödigkeiten der Bauteile weitestgehend vermieden werden, wie sie bei großflächigen und durchgehenden Plastifizierungen von thermoplastischen Bauteilen bzw Werkstoffen entstehen können. Die Bauteile bleiben somit duktiler und sind weniger bruchgefährdet.

Nach Fertigstellung der Anbringung des Bodenteils 22 im Bereich der unteren Stirnseite 2a und damit der Verbindung zwischen dem Bodenteil und dem Filterschlauch, kann der insoweit gefertigte Filterschlauch 2 aus der Haltevorrichtung 25 entnommen werden. Soweit die Flexibilität des Filterschlauchs 2 dies erlaubt, kann der Filterschlauch nun in umgekehrter Richtung aus der Haltevorrichtung entnommen werden, wie er dort eingeführt worden ist. Hierdurch wird auch im Bereich des unteren Endes 2a des Filterschlauchs dessen Umbörderlung bzw Umstülpung wieder rückgängig gemacht und auch in diesem Bereich die zylindrische Form wieder hergestellt. Das befestigte Bodenteil 22 und auch die Verbindung zwischen dem Bodenteil 22 und dem Filterschlauch 2 befindet sich dadurch im Filterschlauch 2 innenliegend, wie dies in Fig. 2 und 3 gezeigt ist. Das Bodenteil 22 weist hierdurch nun in seinem Randbereich eine Art Kragen oder Falz auf. Der Randbereich 22a des Bodenteils 22 steht hierbei zumindest näherungsweise senkrecht von der freien nichtverbundenen kreisförmigen Fläche 22b der Außenseite des Bodenteils 22 ab. Alternativ kann der Filterschlauch 2 auch in Einführungsrichtung entlang seiner vollständigen Länge durch die Haltevorrichtung 25 hindurchgezogen und dadurch aus der Haltevorrichtung 25 hinausgeführt werden. Eine weitere Alternative besteht darin, die Haltevorrichtung 25 zweiteilig zu gestalten, so daß zwei Ringhälften geöffnet, der Filterschlauch 2 seitlich herausgeführt und dann der Haltevorrichtung 25 entweder wieder geschlossen oder vor dem Schliessen ein neuer Filterschlauch 2 in die Haltevorrichtung, zu einer erneuten Anbringung eines Bodenteils 25 eingeführt wird.

Im Anschluß daran kann nun das Draht- oder Stützgestell 4 in den Filterschlauch 2 eingeschoben werden. Dies erfolgt von der offenen Kopfseite des Filterschlauchs 2 aus, welches mit seinem einen Ende vollständig durch den Filterschlauch 2 bis zum Bodenteil 22 geschoben wird. Danach ist die Filterschlaucheinrichtung 1 fertiggestellt und kann in eine Filteranlage eingesetzt werden.

Um mit möglichst geringem Aufwand Filterschlaucheinrichtungen 1 mit unterschiedlichen Durchmessern herstellen zu können, können mehrere an sich identische Haltevorrichtungen 25 vorgesehen sein, deren Durchgangsausnehmung 26 jedoch mit unterschiedlichen Durchmessern versehen sind. Für den Fall, daß Filterschlaucheinrichtungen 1 mit großen Unterschieden bezüglich ihrer Durchmesser gefertigt werden sollen, können auch Scheibenhalter 30 für die Bodenteile 22 mit unterschiedlich großen Durchmessern bzw. Kontaktflächen vorgesehen sein. Mittels der Variation der Größe der Haltevorrichtungen 25 und optional und bei Bedarf auch durch Variation der Größe des Scheibenhalters 30, ist es möglich, in derselben Fertigungsanlage Filterschläuche 2 zu fertigen, die unterschiedliche Dimensionen aufweisen.

### Bezugszeichenliste

| | | | |
|---|---|---|---|
| 1 | Filterschlaucheinrichtung | 26 | zylindrische Durchgangsausnehmung |
| 2 | Filterschlauch | | |
| 2a | unteres Ende | 27 | Stirnseite |
| 3 | Filteranlage | 28 | Stirnseite |
| 4 | Draht- oder Stützgestell | 29 | Innenseite |
| 5 | Abgaskanal | 30 | Scheibenhalter |
| 6 | Kammer | 31 | Kontaktseite von 30 |
| 7 | Deckenelement | 33 | Bolzen |
| 8 | Einlaß | 35 | Pfeil (Rotation) |
| 9 | Pfeil | 36 | Pfeil (Kraft) |
| 10 | offenes oberes Ende | | |
| 11 | Auslass | | |
| 20 | Kopfteil | | |
| 22 | Bodenteil | | |
| 22a | Randbereich | | |
| 22b | Fläche | | |
| 23 | Umbördelung | | |
| 25 | Haltevorrichtung | | |

## Patentansprüche

1. Verfahren zur Erzeugung einer Filterschlaucheinrichtung (1) für eine Filteranlage (3) zur Filtrierung von staub- und/oder rauchbelasteter Gase, bei dem im Bereich von zwei zueinander parallel verlaufenden Längskanten eines biegeschlaffen textilen Werkstücks eine Naht zur Verbindung der beiden Bereiche der Längskanten erzeugt und hierdurch das textile Werkstück zu einem biegeschlaffen Schlauch eines Filterschlauch (2) gestaltet wird, an einer Stirnseite des auf diese Weise erzeugten schlauchförmigen Filterschlauchs (2) ein zumindest näherungsweise kreisrundes Bodenteil (22) durch ein Schweißverfahren angebracht wird, um den Filterschlauch (2) im Bereich seines Bodens zu verschliessen, und bei dem ein Draht- oder Stützgestell (4) in den Filterschlauch (2) zur Formstabilisierung des Filterschlauchs (2) eingeführt wird,
**dadurch gekennzeichnet, daß**
das Bodenteil (22) mittels eines Reibschweißvorgangs am Filterschlauch (2) angebracht und mit diesem verbunden wird.

2. Verfahren nach Anspruch 1, **dadurch gekennzeichnet, daß** das Draht- oder Stützgestell (4) erst nach der Anbringung des Bodenteils (22) am Filterschlauch (2) mittels des Rotationsreibschweißvorgangs in den Filterschlauch (2) eingeführt und in diesem in seine Endposition im Filterschlauch verbracht wird.

3. Verfahren nach zumindest einem der vorhergehenden Ansprüche, **dadurch gekennzeichnet, daß** das Reibschweißverfahren als Rotationsreibschweißverfahren ausgebildet ist.

4. Verfahren nach zumindest einem der vorhergehenden Ansprüche, **dadurch gekennzeichnet, daß** das Bodenteil (22) im Bereich der Stirnseite des Filterschlauchs (2) auf dessen Innenseite (29) mittels des Reibschweißvorgangs am Filterschlauch (2) befestigt wird.

5. Verfahren nach zumindest einem der vorhergehenden Ansprüche, **dadurch gekennzeichnet, daß** ein Ende des Filterschlauchs (2) in ein erstes Ende einer ringförmigen Halteeinrichtung eingeführt, das eingeführte Ende des Filterschlauchs durch die ringförmige Halteeinrichtung (25) hindurchgeführt wird, das stirnseitige Ende des Filterschlauchs (2) aus dem anderen Ende der ringförmigen Halteeinrichtung (25) ausgeführt und im Bereich seines hindurchgeführten stirnseitigen Endes mit seiner Außenseite auf die Stirnseite der ringförmigen Halteeinrichtung (25) zur Auflage gebracht wird, anschließend das Bodenteil (22) gegen die Innenseite (29) des Filterschlauchs (2) zur Anlage gebracht und das Bodenteil (22) in eine rotative Relativbewegung in Bezug auf den Filterschlauch versetzt wird.

6. Verfahren nach zumindest einem der vorhergehenden Ansprüche, **dadurch gekennzeichnet, daß** das Bodenteil (22) während der Erzeugung der Verbindung mit dem Filterschlauch (2) insgesamt eine ebenflächige Form aufweist, und im Bereich einer seiner ebenen Oberfläche mit einer Innenseite (29) des Filterschlauchs (2) verbunden wird, die Stirnseite des Filterschlauchs (2), an dem das Bodenteil (22) mit dem Filterschlauch (2) verbunden ist, hierbei zunächst flanschartig nach außen umgestülpt ist, und nach der Erzeugung der Verbindung mittels des Reibschweißvorgangs, die umgestülpte Stirnseite des Filterschlauchs (2) im Bereich der Verbindung zwischen dem Filterschlauch (2) und dem Bodenteil (22) wieder zurückgestülpt wird.

7. Verfahren nach zumindest einem der vorhergehenden Ansprüche, **dadurch gekennzeichnet, daß** das Draht- oder Stützgestell (4) nach Anbringung des Bodenteils (22) am Filterschlauch (2) in den Filterschlauch (2) eingeführt und bis zu einer Endposition im Filterschlauch (2) in Richtung des bereits eingeschweißten Bodenteils (22) geschoben wird.

8. Filterschlaucheinrichtung (1) zum Einsatz in einer Filteranlage (3), welche zur Reinigung von staub-, rauch- oder mit sonstigen Partikeln belasteten Gasen vorgesehen ist, die Filterschlaucheinrichtung (1) einen Filterschlauch (2) aufweist, der zumindest überwiegend aus einer biegeschlaffen gasdurchlässigen textilen Werkstoffbahn besteht, insbesondere aus Nadelfilz, das zu einer Zylinderform geformt ist und hierzu im Bereich von zwei Längskanten der zumindest im wesentlichen rechteckförmigen Werkstoffbahn diese beiden Längskanten miteinander verbunden sind, wobei der Filterschlauch (2) an einer seiner Stirnseiten mit einem Kopfteil (20) versehen ist, das mit einem Mittel zur Anordnung in der Filteranlage (3) und an seiner anderen Stirnseite mit einem Bodenteil (22) versehen ist, mit welchem der Filterschlauch (2) an dieser Stirnseite verschlossen ist, der Filterschlauch (2) ferner mit einem formstabilisierendem Gestell (4) versehen ist, **gekennzeichnet, durch** eine als Reibschweißverbindung, insbesondere als Rotationsreibschweißverbindung, ausgebildete Verbindung des Bodenteils (22) am Filterschlauch (2).

9. Filterschlaucheinrichtung (1) nach Anspruch 8, **dadurch gekennzeichnet, daß** im Bereich des Bodenteils (22) eine Innenseite (29) des Filterschlauchs (2) flanschartig nach außen gestülpt ist und das zumindest im wesentlichen scheibenförmige Bodenteil (22) an der Innenseite (29) des nach außen gestülpten Bereichs des Filterschlauchs (2) mittels der Reibschweißverbindung befestigt ist.

10. Filterschlaucheinrichtung (1) nach Anspruch 8, **dadurch gekennzeichnet, daß** in der Gebrauchslage der Filterschlaucheinrichtung (1) das Bodenteil (22) im Bereich seines Randes umgestülpt ist, der Filterschlauch auch im Bereich seiner Stirnseite die zylindrische Form des Filterschlauchs (2) aufweist, wobei der Randbereich des Bodenteils (22) von der freien nichtverbundenen kreisförmigen Fläche der Außenseite des Bodenteils absteht.

11. Filterschlaucheinrichtung (1) nach zumindest einem der vorhergehenden Ansprüche **dadurch gekennzeichnet, daß** die Reibschweißverbindung lediglich im Kontaktbereich zwischen dem Bodenteil (22) und dem Filterschlauch (2) nach einer Erwärmung und Plastifizierung aufgrund eines Reibschweißvorgangs wieder abgekühlten Kunststoff aufweist und eine Außenseite des Bodenteils (22) und des Filterschlauchs (2) frei von während der Erzeugung der Reibschweißverbindung zwischen dem Bodenteil und des Filterschlauchs, entstandenem plastifizierten Kunststoff ist.

12. Filterschlaucheinrichtung nach zumindest einem der vorhergehenden Ansprüche, **dadurch gekennzeichnet, daß** das Bodenteil im befestigten Zustand und in der Gebrauchslage am Filterschlauch eine im wesentlichen ebenflächige Scheibenform mit einem um den Reibschweißverbindungsbereich des Bodenteils am Filterschlauch umgebogenen Randbereich aufweist.

13. Filterschlauchfertigungsanlage zur Erzeugung von Filterschläuchen aus biegeschlaffen textilen Materialien, die mit einer Nahterzeugungseinrichtung versehen ist, die zumindest zur Erzeugung einer Verbindungsnaht im Bereich von zwei Längskanten eines im wesentlichen rechteckigen Zuschnitts, sowie einer Schweißeinrichtung, zur Erzeugung einer stoffschlüssigen Verbindung zwischen einem Bodenteil und einer Stirnseite des Filterschlauchs, versehen ist, **dadurch gekennzeichnet, daß** die Schweißeinrichtung als Rotationsschweißeinrichtung ausgebildet ist, die mit einem Rotationsantrieb versehen ist, wobei mittels des Rotationsantriebs ein Halter zur rotationsfesten Aufnahme eines Bodenteils in Rotation in eine vorbestimmte Rotationsrichtung mit einer vorbestimmbaren Drehzahl versetzbar ist, eine Halteeinrichtung zur Aufnahme des Filterschlauchs vorgesehen ist, wobei die Halteeinrichtung ring- oder zylinderförmig ausgebildet ist, eine Durchgangsausnehmung aufweist, deren Durchmesser zumindest näherungsweise einem Sollaußendurchmesser des zu fertigenden Filterschlauchs entspricht, so daß ein Bereich einer Stirnseite des Filterschlauchs durch die Durchgangsausnehmung hindurchführbar ist und mit einem Teil einer Außenseite des Filterschlauchs auf eine stirnseitige Fläche, insbesondere eine ringförmige Fläche, der Halteeinrichtung auflegbar ist, der Halter des Bodenteils gegen die Innenseite des Filterschlauchs mit Druck flächig und vorzugsweise zumindest weitestehend eben in Anlage bringbar, sowie in Rotation versetzbar ist.

## Claims

1. A method for producing a filter hose unit (1) for a filter system (3) for filtering dust- and/or smoke-laden gases, in which a seam for connecting the two regions of the longitudinal edges is produced in the region of two mutually parallel longitudinal edges of a flexible textile workpiece, and the textile workpiece is thereby formed into a flexible hose of a filter hose (2), an at least approximately circular base part (22) is attached to a front side of the tubular filter hose (2) produced in this way by means of a welding process in order to close the filter hose (2) in the region of its base, and in which a wire or supporting frame (4) is introduced into the filter hose (2) in order to stabilize the shape of the filter hose (2), **characterized in that** the base part (22) is attached to the filter hose (2) by means of a friction welding process and connected to it.

2. The method according to claim 1, **characterized in that** the wire or supporting frame (4) is only introduced into the filter hose (2) and brought into its end position in the filter hose after the base part (22) has been attached to the filter hose (2) by means of the rotational friction welding process.

3. The method according to at least one of the preceding claims, **characterized in that** the friction welding process is configured as a rotational friction welding process.

4. The method according to at least one of the preceding claims, **characterized in that** the base part (22) is attached to the inner side (29) of the filter hose (2) in the region of the front side of the filter hose (2) by means of the friction welding process.

5. The method according to at least one of the preceding claims, **characterized in that** one end of the filter hose (2) is introduced into a first end of an annular holding device, the introduced end of the filter hose is passed through the annular holding device (25), the front side of the filter hose (2) is passed out of the other end of the annular holding device (25) and, in the region of its front side that has been passed through, is brought to bear with its outer side on the front side of the annular holding device (25), then the base part (22) is brought to bear against the inner side (29) of the filter hose (2) and the base part (22) is set in a rotary relative movement with respect to the filter hose.

6. The method according to at least one of the preceding claims, **characterized in that** the base part (22) has an overall planar shape during the formation of the connection with the filter hose (2), and in the region of one of its planar surfaces is connected to an inner side (29) of the filter hose (2), the front side of the filter hose (2), to which the base part (22) is connected to the filter hose (2), is first turned outwards in a flange-like manner, and after the connection has been created by means of the friction welding process, the turned-out front side of the filter hose (2) is turned back again in the region of the connection between the filter hose (2) and the base part (22).

7. The method according to at least one of the preceding claims, **characterized in that** the wire or supporting frame (4) is introduced into the filter hose (2) after the base part (22) has been attached to the filter hose (2) and pushed to an end position in the filter hose (2) in the direction of the base part (22) already welded in.

8. A filter hose unit (1) for use in a filter system (3) which is intended for cleaning gases contaminated with dust, smoke or other particles, the filter hose unit (1) having a filter hose (2) which consists at least predominantly of a flexible gas-permeable textile material web, in particular of needle felt, which is shaped into a cylindrical form and, for this purpose, in the region of two longitudinal edges of the at least substantially rectangular material web, these two longitudinal edges are connected to one another, wherein the filter hose (2) is provided at one of its front sides with a head part (20) which is provided with a means for arranging in the filter system (3) and, at its other front side, with a base part (22), with which the filter hose (2) is closed at this front side, the filter hose (2) being further provided with a shape-stabilizing frame (4), **characterized by** a formed connection of the base part (22) on the filter hose (2) which is designed as a friction welded connection, in particular as a rotational friction welded connection.

9. The filter hose unit (1) according to claim 8, **characterized in** in the region of the base part (22), an inner side (29) of the filter hose (2) is turned outwards in the manner of a flange and the at least substantially disc-shaped base part (22) is attached to the inner side (29) of the outwardly turned region of the filter hose (2) by means of the friction welding connection.

10. The filter hose unit (1) according to claim 8, **characterized in that** in the position of use of the filter hose unit (1) the base part (22) is everted in the region of its edge, the filter hose also has the cylindrical shape of the filter hose (2) in the region of its front side, wherein the edge region of the base part (22) protrudes from the free non-connected circular surface of the outer side of the base part.

11. The filter hose unit (1) according to at least one of the preceding claims, **characterized in that** that the friction welding connection only in the contact region between the base part (22) and the filter hose (2) after heating and plasticizing due to a friction welding process exhibits cooled plastic and an outer side of the base part (22) and of the filter hose (2) is free of plasticized plastic arising during the production of the friction welding connection between the base part and the filter hose

12. The filter hose unit according to at least one of the preceding claims, **characterized in that** the base part in the attached state and in the position of use on the filter hose has a substantially planar disc shape with an edge region bent around the friction welding connection region of the base part on the filter hose.

13. A filter hose manufacturing plant for producing filter hoses from flexible textile materials, which is provided with a seam-producing device which is used at least to produce a connecting seam in the region of two longitudinal edges of a substantially rectangular blank, and a welding device for producing a material-locking connection between a base part and a front side of the filter hose, **characterized in that** the welding device is formed as a rotation welding device which is provided with a rotation drive, wherein a holder for receiving a base part in a rotationally fixed manner can be set in rotation in a predetermined direction of rotation at a predeterminable speed by means of the rotational drive, a holding device for receiving the filter hose is provided, wherein the holding device is annular or cylindrical in shape and has a through-recess whose diameter corresponds at least approximately to a nominal external diameter of the filter hose to be produced, so that a region of one end of the filter hose can be passed through the through-recess and, with part of an outer side of the filter hose, can be laid on a front side, in particular an annular face, of the holding device, the holder of the base part can be brought to lie flat against the inner side of the filter hose with pressure and preferably at least as far as possible in a standing position, and can be set in rotation.

## Revendications

1. Procédé pour produire un dispositif à tuyau filtrant (1) pour une installation de filtration (3) destinée à filtrer des gaz chargés de poussière et/ou de fumée, dans lequel une couture est produite dans la zone de deux bords longitudinaux d'une pièce textile souple qui s'étendent parallèlement l'un à l'autre, afin d'assembler les deux zones des bords longitudinaux, et ainsi la pièce textile forme un tuyau souple d'un tuyau filtrant (2), une partie de fond au moins approximativement circulaire (22) est fixée par un procédé de soudage sur une face frontale du tuyau filtrant souple (2) produit de cette manière, afin d'obturer le tuyau filtrant (2) dans la zone de son fond, et dans lequel une armature en fil ou de support (4) est introduite dans le tuyau filtrant (2) pour stabiliser la forme du tuyau filtrant (2),
**caractérisé en ce**
**que** la partie de fond (22) est montée sur le tuyau filtrant (2) et assemblée avec celui-ci au moyen d'une opération de soudage par friction.

2. Procédé selon la revendication 1, **caractérisé en ce que** l'armature en fil ou de support (4) n'est introduite dans le tuyau filtrant (4) qu'après la fixation de la partie de fond (22) sur le tuyau filtrant (2) au moyen de l'opération de soudage par friction rotative, et est amenée dans celui-ci dans sa position finale au sein du tuyau filtrant.

3. Procédé selon au moins l'une des revendications précédentes, **caractérisé en ce que** le procédé de soudage par friction est conçu comme un procédé de soudage par friction rotative.

4. Procédé selon au moins l'une des revendications précédentes, **caractérisé en ce que** la partie de fond (22) est fixée sur le tuyau filtrant (2) dans la zone de la face frontale du tuyau filtrant (2), sur le côté intérieur de celui-ci, au moyen de l'opération de soudage par friction.

5. Procédé selon au moins l'une des revendications précédentes, **caractérisé en ce qu'**une extrémité du tuyau filtrant (2) est introduite dans une première extrémité d'un dispositif de support annulaire, l'extrémité introduite du tuyau filtrant est guidée à travers le dispositif de support annulaire (25), l'extrémité frontale du tuyau filtrant (2) est guidée à l'extérieur de l'autre extrémité du dispositif de support annulaire (25) et s'applique avec sa face extérieure contre la face frontale du dispositif de support annulaire (25) dans la zone de son extrémité frontale guidée à travers celui-ci, ensuite la partie de fond (22) est appliquée contre le côté intérieur (29) du tuyau filtrant (2) et la partie de fond (22) est mise en rotation relative par rapport au tuyau filtrant.

6. Procédé selon au moins l'une des revendications précédentes, **caractérisé en ce que** la partie de fond (22) a globalement une forme plane pendant la réalisation de l'assemblage avec le tuyau filtrant (2), et est assemblée avec un côté intérieur (29) du tuyau filtrant (2) dans la zone d'une de ses surfaces planes, la face frontale du tuyau filtrant (2), sur laquelle la partie de fond (22) est assemblée avec le tuyau filtrant (2), est d'abord retournée vers l'extérieur à la manière d'une bride, et après la réalisation de l'assemblage au moyen de l'opération de soudage par friction, la face frontale retournée du tuyau filtrant (2) est de nouveau retournée dans la zone de l'assemblage entre le tuyau filtrant (2) et la partie de fond (22).

7. Procédé selon au moins l'une des revendications précédentes, **caractérisé en ce que**, après la fixation de la partie de fond (22) sur le tuyau filtrant (2), l'armature en fil ou de support (4) est introduite dans le tuyau filtrant (2) et est poussée jusqu'à une position finale dans le tuyau filtrant (2) en direction de la partie de fond (22) déjà soudée.

8. Dispositif à tuyau filtrant (1) pour une utilisation dans une installation de filtration (3) qui est destinée à épurer des gaz chargés de poussière, de fumée ou d'autres particules, le dispositif à tuyau filtrant (1) comporte un tuyau filtrant (2) qui est au moins majoritairement constitué d'une bande de matière textile souple perméable au gaz, en particulier d'un feutre aiguilleté, à laquelle est donnée une forme de cylindre et ainsi, dans la zone de deux bords longitudinaux de la bande de matière au moins sensiblement rectangulaire, ces deux bords longitudinaux sont assemblés l'un à l'autre, dans lequel le tuyau filtrant (2) est muni, sur l'une de ses faces frontales, d'une partie de tête (20) qui est pourvue d'un moyen d'agencement dans l'installation de filtration (3) et, sur son autre face frontale, d'une partie de fond (22) avec laquelle le tuyau filtrant (2) est obturé sur cette face frontale, le tuyau filtrant (2) est en outre muni d'une armature de stabilisation de forme (4), **caractérisé par** un assemblage de la partie de fond (22) sur le tuyau filtrant (2), réalisé sous la forme d'un assemblage par soudage par friction, en particulier sous la forme d'un assemblage par soudage par friction rotative.

9. Dispositif à tuyau filtrant (1) selon la revendication 8, **caractérisé en ce que**, dans la zone de la partie de fond (22), un côté intérieur (29) du tuyau filtrant (2) est retourné vers l'extérieur à la manière d'une bride et la partie de fond (22) au moins sensiblement en forme de disque, est fixée sur le côté intérieur (29) de la zone du tuyau filtrant (2) repliée vers l'extérieur au moyen de l'assemblage par soudage par friction.

10. Dispositif à tuyau filtrant (1) selon la revendication 8, **caractérisé en ce que**, dans la position d'utilisation du dispositif à tuyau filtrant (1), la partie de fond (22) est retournée dans la zone de son bord, le tuyau filtrant présente également la forme cylindrique du tuyau filtrant (2) dans la zone de sa face frontale, dans laquelle la zone de bord de la partie de fond (22) fait saillie à partir de la face circulaire libre non assemblée du côté extérieur de la partie de fond.

11. Dispositif à tuyau filtrant (1) selon au moins l'une des revendications précédentes, **caractérisé en ce que** l'assemblage par soudage par friction comporte une matière plastique de nouveau refroidie uniquement dans la zone de contact entre la partie de fond (22) et le tuyau filtrant (2) après un échauffement et une plastification dus à une opération de soudage par friction, et une face extérieure de la partie de fond (22) et du tuyau filtrant (2) est dépourvue de matière plastique plastifiée résultante pendant la réalisation de l'assemblage par soudage par friction entre la partie de fond et le tuyau filtrant.

12. Dispositif à tuyau filtrant selon au moins l'une des revendications précédentes, **caractérisé en ce que** la partie de fond présente, à l'état fixé et dans la position d'utilisation sur le tuyau filtrant, une forme de disque sensiblement plane avec une zone de rebord repliée autour de la zone d'assemblage par soudage par friction de la partie de fond sur le tuyau filtrant.

13. Installation de fabrication de tuyaux filtrants destinée à produire des tuyaux filtrants à partir de matières textiles souples, qui est équipée d'un dispositif de production de couture au moins destiné à produire une couture d'assemblage au niveau de deux bords longitudinaux d'une découpe sensiblement rectangulaire, ainsi que d'un dispositif de soudage destiné à réaliser un assemblage par liaison de matière entre une partie de fond et une face frontale du tuyau filtrant,
**caractérisée en ce que** le dispositif de soudage est conçu comme un dispositif de soudage rotatif qui est équipé d'un entraînement rotatif, dans lequel, pour la réception fixe en rotation d'une partie de fond, au moyen de l'entraînement rotatif, un support peut être mis en rotation dans un sens de rotation prédéterminé à une vitesse pouvant être prédéterminée, un dispositif de support est prévu pour recevoir le tuyau filtrant, dans lequel le dispositif de support est réalisé avec une forme circulaire ou cylindrique, comporte un évidement de passage dont le diamètre correspond au moins approximativement à un diamètre extérieur de consigne du tuyau filtrant à fabriquer, de telle sorte qu'une zone d'une face frontale du tuyau filtrant peut passer à travers l'évidement de passage et peut être reposer avec une partie d'une face extérieure du tuyau filtrant sur une face frontale, en particulier une face annulaire, du dispositif de support, le support de la partie de fond peut être amené à plat contre le côté intérieur du tuyau filtrant sous l'action d'une pression et peut être mis en butée de préférence au moins en grande partie à plat, ainsi qu'en rotation.
